# EUROPÄISCHE PATENTANMELDUNG

(11) **EP 0 709 137 A1**
(43) Veröffentlichungstag der Anmeldung: **01.05.1996**
(21) Anmeldenummer: 95116472.2
(22) Anmeldetag: 19.10.1995
(51) Int. Cl.: B03B 9/06, B07B 1/12

(54) **Vorrichtung zum Vorsortieren und Transportieren von Altglas**

(30) Priorität: 29.10.1994 DE 4438676
(71) Anmelder: Beteiligungen Sorg GmbH & Co. KG, D-97816 Lohr (DE)
(72) Erfinder: Engels, Theo, D-41836 Hückelhoven-Rurich (DE); Rosenthal, Jens, D-41812 Erkelenz (DE); Hecht, Dieter, CH-6331 Hünenberg (CH)
(74) Vertreter: Zapfe, Hans, Dipl.-Ing.

(57) **Zusammenfassung**

Eine Vorrichtung zum Vorsortieren und Transportieren eines Stromes von festem Altglas mit Flaschen und großen Flaschenteilen von einer Sammelstelle (12) unter Ausscheidung von Feinteilen zu einer Trenneinrichtung (18) für die Aufteilung des verbliebenen Glasstromes in unterschiedliche Komponenten besitzt eine schwingungsfähige Bezugsplattform (1), an der in Transportrichtung mit Gefälle versehene Gleitführungen (4) für Flaschen und große Flaschenteile angeordnet sind, die Durchtritte für die Feinteile zwischen sich einschließen. Den Gleitführungen (4) sind Mittel zum Überleiten der lageorientierten Teile zur Trenneinrichtung (18) nachgeschaltet. Zwecks besserer Abtrennung der Feinteile weisen die Gleitführungen (4) in Transportrichtung ein zunehmendes Gefälle auf. Vorzugsweise sind die Gleitführungen (4) in Transportrichtung durch Unterbrechungen (7, 8) in Führungsabschnitte (9, 10, 11) unterteilt, die in Transportrichtung Abstände voneinander aufweisen.

## Beschreibung

Die Erfindung betrifft eine Vorrichtung zum Vorsortieren und Transportieren eines Stromes von festem Altglas mit Flaschen und großen Flaschenteilen von einer Sammelstelle für eine Altglasmasse unter Ausscheidung von Feinteilen zu mindestens einer Trenneinrichtung für die Aufteilung des verbliebenen Glasstromes in unterschiedliche Komponenten, mit einer schwingungsfähigen Bezugsplattform, an der in Transportrichtung mit Gefälle versehene Gleitführungen für einen lageorientierten Transport der Flaschen und großen Flaschenteile angeordnet sind, die Durchtritte für die Feinteile zwischen sich einschließen, sowie mit Mitteln zum Überleiten der lageorientierten Teile zur Trenneinrichtung.

Derartige Vorrichtungen sind Teile von Anlagen für das Recycling von Altglas, das heute einen wertvollen Rohstoff für die Glasindustrie darstellt. Das Altglas wird in der Regel in Form einer wahllos zusammengesetzten Mischung von Teilen angeliefert, die auch glasfremde Beimengungen wie Kunststoffe und Steingutflaschen, sowie ganze, d.h. unzerbrochene Flaschen enthalten. Auch eine Vorsortierung in den Sammelcontainern in Weiß-, Braun- und Grünglas schließt artfremde Verunreinigungen nicht aus, insbesondere nicht das Vorhandensein von Glas unterschiedlicher Farbe. Das Recycling derartiger Altglasmassen bereitet besondere Schwierigkeiten, da die Altglasmasse in die unterschiedlichsten Komponenten zerlegt werden muß.

Bei den Trenneinrichtungen für das bereits vorsortierte Altglas kann es sich um solche handeln, die ohne Farbsortierung lediglich glasfremde Bestandteile wie Metall-, Kunststoff- und Keramikteile aussondern, die für den nachfolgenden Schmelzprozeß besonders störend sind, aber auch um Einrichtungen, die eine Trennung in Glasströme unterschiedlicher Farben sowie in Reststoffe ermöglichen, zu denen auch Glaspartikel gehören, die wegen ihrer geringen Größe nicht mehr nach Farben sortiert werden können.

Trenneinrichtungen zur Farbsortierung erfordern eine besondere Sorgfalt beim Transport der Altglasteile durch die Trenneinrichtung, und zwar insbesondere hinsichtlich der Raumlage der Altglasteile in den einzelnen Stationen der Trenneinrichtung. Die einzelnen Stationen der Trenneinrichtung, die hier nicht näher beschrieben werden, besitzen in aller Regel eine Lichtquelle und einen Sensor für einen ausgewählten Spektralbereich des empfangenen Lichtes sowie eine mechanische oder pneumatische Auswurfvorrichtung für das betreffende, von dem Sensor untersuchte Glasteil. Hierbei treten Schwierigkeiten auf, wenn die untersuchten Oberflächenteile des Altglases noch mit Etiketten versehen oder stark verschmutzt sind. Möglich sind Transmissions- und Reflexionsmessungen.

Die optische und mechanische Funktion der Trenneinrichtungen kann aber auch dadurch erheblich beeinträchtigt werden, daß Teile mitgeschleppt werden, die entweder glasfremd sind oder eine solche Form und/oder Größe aufweisen, daß sie entweder vom Sensor nicht zuverlässig erfaßt oder von der Auswurfvorrichtung nicht zuverlässig ausgeworfen werden können. Hierbei kann es auch zu einer Blockierung der Trenneinrichtung kommen, so daß die gesamte Anlage durch eine Notabschaltung stillgesetzt werden muß.

Die Erfindung befaßt sich insbesondere mit einer Vorrichtung für das Recycling von Altglas, das zu einem wesentlichen Anteil ganze Flaschen und/oder Bruchstücke von Flaschen enthält, von denen zumindest noch ein wesentlicher Teil des eigentlichen Flaschenkörpers erhalten ist, d.h. bei dem in der Regel der Hals abgebrochen ist. Der Flaschenkörper selbst kann dabei eine zylindrische, quaderförmige, kugelförmige, prismatische oder dreikantige Außenseite aufweisen. Es geht also speziell darum, diese ganzen Flaschen oder großen Flaschen-Bruchstücke der Trenneinrichtung zuzuführen und einen möglichst großen Teil der nicht zu dieser Kategorie gehörenden Begleitstoffe vor dem Durchlauf durch die Trenneinrichtung auszusortieren.

Bei der eingangs beschriebenen, durch die DE-OS 31 19 329 bekannten Vorrichtung besitzen die Gleitführungen, die dort als Längsstäbe ausgeführt sind, ein konstantes Gefälle. Dies hat zur Folge, daß der Abstand zwischen den Flaschen und den großen Flaschenteilen sich beim Transport nicht oder nur unwesentlich verändert, so daß zwischen diesen Flaschen und Flaschenteilen auch kleinere Bruchstücke, darunter auch Fremdstoffe, festgehalten werden, die auf dem sich anschließenden Transportweg sowie in der Trenneinrichtung zu Störungen führen können. Hierbei muß man sich vor Augen halten, daß große Flaschenteile Hohlkörper darstellen, die auch in ihrem Innenraum kleinere Teile enthalten können, darunter auch solche aus Fremdstoffen, die den Trennprozeß in der Trenneinrichtung erheblich stören können. Eine weitere Störungsursache sind größere mitgeschleppte Flachglasscherben.

Durch die DE 31 40 738 A1 ist ein Materialsichter für partikelförmiges Siebgut unterschiedlicher Korngrößen bekannt, bei dem mehrere, in Schwingungen versetzbare, flexible Drahtsiebe mit von oben nach unten abnehmender Maschenweite über waagrechte Haltestangen straff gespannt sind, um dadurch einzelne Siebfelder mit zunehmendem Gefälle zu bilden. Diese Siebfelder haben jedoch keine Richtwirkung gegenüber Flaschen und größeren Flaschenteilen, so daß diese den Materialsichter in ungeordneten Raumlagen verlassen würden. Infolgedessen können sie in einer gegebenenfalls nachgeschalteten Sortieranlage nicht mit ausreichender Sicherheit erfaßt und nach Farben oder glasfremden Begleitstoffen getrennt werden. Durch das zunehmende Gefälle vergrößert sich zwar der Abstand zwischen den Partikeln, jedoch können über die Maschenweite hinausgehende Partikel nicht nach unten austreten, da die Drahtsiebe in Transportrichtung und quer dazu durchgehend ausgebildet sind.

Der Erfindung liegt daher die Aufgabe zugrunde, eine Vorrichtung der eingangs beschriebenen Gattung anzugeben, durch die kleinstückige und/oder glasfremde Begleitstoffe stärker als bisher im Bereich der Gleitführungen abgetrennt werden können, ohne daß die Lageorientierung von Flaschen und großen Flaschenteilen beeinträchtigt wird.

Die Lösung der gestellten Aufgabe erfolgt bei der eingangs angegebenen Vorrichtung erfindungsgemäß dadurch, daß die Gleitführungen in Transportrichtung ein zunehmendes Gefälle aufweisen.

Eine der Möglichkeiten besteht darin, die Gleitführungen gekrümmt auszubilden, wodurch sich der Abstand zwischen den Flaschen und großen Flaschenteilen in Transportrichtung im Sinne einer Vereinzelung vergrößert, so daß etwa eingeschlossene oder mitgenommene Kleinteile freigegeben werden und durch die Spalte zwischen den Gleitführungen hindurchfallen können.

Es ist aber besonders vorteilhaft, die Gleitführungen in Transportrichtung durch mindestens eine Unterbrechung in Führungsabschnitte zu unterteilen, wobei die Konstruktionsvorschrift des zunehmenden Gefälles eingehalten wird. In Transportrichtung vorgesehene Abstände, die natürlich kürzer sind als die Flaschen bzw. Flaschenteile, erleichtern das Hindurchfallen kleinerer Teile, die von einem unterhalb der Gleitführungen angeordneten Transportband abgeführt werden.

Es ist dabei wiederum besonders vorteilhaft, wenn zwischen den einzelnen Führungsabschnitten mindestens eine Höhenstufe vorhanden ist, wobei beim Überlauf über die Höhenstufe die Achsen der Flaschen und der großen Flaschenteile eine Kippbewegung und eine Vertikalverschiebung zueinander ausführen, so daß auch hierdurch ansonsten festgehaltene Kleinteile freigegeben werden. Besonders vorteilhaft ist es hierbei, wenn zwischen den einzelnen Führungsabschnitten in Transportrichtung zusätzlich mindestens ein waagrechter Abstand vorhanden ist.

Es ist dabei besonders vorteilhaft, wenn:
- ein erster Führungsabschnitt aus Stäben besteht, die in zwei untereinander liegenden Ebenen angeordnet sind,
- jeweils vier Stäbe, deren Achsen auf den Eckpunkten eines sich nach oben verbreiternden Trapezes liegen, eine Stabgruppe bilden,
- die besagten Ebenen in Transportrichtung divergierend angeordnet sind, um den Austritt von Feinteilen aus dem Transportweg zu erleichtern,
- die beiden unteren Stäbe einer Stabgruppe durch ein dachförmiges Profil miteinander verbunden sind, dessen Längsachse in Transportrichtung verläuft,
- ein zweiter Führungsabschnitt aus mindestens einem Blech besteht, das sowohl in Transportrichtung als auch quer dazu nach unten geneigt verläuft und an der tiefer liegenden Kante eine in Transportrichtung verlaufende, nach oben ragende Seitenfläche aufweist,
- das mindestens eine Blech mit Durchbrechungen für den Durchtritt von Feinteilen nach unten versehen ist,
- ein dritter Führungsabschnitt aus Profilen mit je einer Dachfläche besteht, deren Firstlinien in Transportrichtung verlaufen und wenn die Profile Abstände für den Durchtritt von Feinteilen aufweisen,
- die Profile unterschiedliche Längen aufweisen, derart, daß die Firstlinien an den Profilenden angenähert auf einer Linie liegen, die unter einem von 90 Grad abweichenden Winkel zur Transportrichtung verläuft, beispielsweise unter einem Winkel von 30 - 60 Grad,
- die Firstlinien der Profile alternierend in zwei geneigten Ebenen liegen, die in Transportrichtung divergierend verlaufen,
- mindestens zwei der Führungsabschnitte an einem Tragrahmen angeordnet sind, dessen Hauptebene in Transportrichtung nach unten geneigt an der Bezugsplattform befestigt ist, und wenn schließlich
- das mindestens eine Blech an der Übergangsstelle in die Seitenfläche mit einem Schlitz für den seitlichen Austritt von Flachglas-Scherben versehen ist.

Derartige und verhältnismäßig große Flachglasscherben finden sich unvorhersehbar häufig gleichfalls in dem angelieferten Altglas. Es wurde beobachtet, daß derartige Flachglasscherben beim Stand der Technik auf den Gleitführungen gleiten und bis zum Einlauf in die Trenneinrichtung transportiert werden, wo sie eine Blockierung der Trenneinrichtung verursachen können. Durch die angegebenen Schlitze wird nun dafür gesorgt, daß diese Scherben frühzeitig aus dem Altglasstrom ausgesondert werden und somit nicht mehr in die Trenneinrichtung eintreten können.

Unter dem Ausdruck "Bezugsplattform" ist nicht etwa ein fester, plattenförmiger Gegenstand zu verstehen, sondern auch und insbesondere ein schwingungsfähiger Rahmen, an dem die Gleitführungen bzw. Führungsabschnitte befestigt sind, wobei diese Befestigung in vorteilhafter Weise verstellbar erfolgt.

Ein Ausführungsbeispiel des Erfindungsgegenstandes wird nachfolgend anhand der Figuren 1 bis 8 näher erläutert.

Es zeigen:
- Figur 1: eine Seitenansicht der erfindungsgemäßen Vorrichtung,
- Figur 2: eine Draufsicht auf den Gegenstand von Figur 1, jedoch ohne den Schwingungsantrieb,
- Figur 3: einen Schnitt entlang der Linie B-B in Figur 1 mit Blickrichtung nach links,
- Figur 4: einen vergrößerten Teilausschnitt aus Figur 1 entlang der Linie A-A,
- Figur 5: einen vergrößerten Teilausschnitt aus Figur 1 entlang der Linie B-B,
- Figur 6: einen Schnitt entlang der Linie C-C in Figur 1 mit Blickrichtung nach links (vergrößert),
- Figur 7: einen Schnitt entlang der Linie D-D in Figur 1 mit Blickrichtung nach links (vergrößert), und
- Figur 8: einen vergrößerten Teilausschnitt aus dem Kreis "K" in Figur 7 mit einem überlagerten Teilausschnitt aus Figur 6 (zum Betrachter hin verschoben).

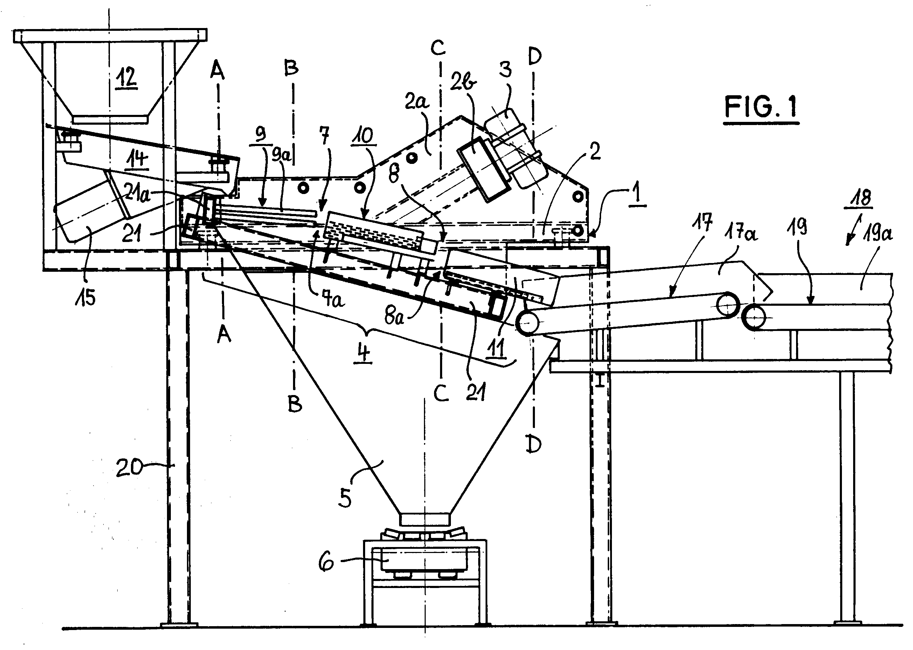

In Figur 1 ist eine schwingungsfähige Bezugsplattform 1 mit einem waagrechten Rahmen 2 dargestellt, der mit einem Schwingungsantrieb 3 in Verbindung steht. An dem Rahmen 2 sind in paarweiser Anordnung Gleitführungen 4 befestigt, die auf ihrer Gesamtlänge eine derartige Formgebung aufweisen, daß Flaschen und große Flaschenteile nicht hindurchfallen können, aber auch nicht schwergängig werden. Kleinteile und größere Flachglasscherben hingegen können in einen Auffangtrichter 5 fallen, der unterhalb der Gleitführungen 4 angeordnet ist. Durch den Abstand zwischen den Gleitführungen 4 werden Durchtritte für die Feinteile gebildet. Diese Durchtritte sind unterschiedlich gestaltet und werden nachfolgend noch näher beschrieben. Unterhalb des Auffangtrichters 5 befindet sich ein Querförderband 6, das zu einem nicht gezeigten Sammelbehälter führt.

Die Gleitführungen 4 sind in Transportrichtung durch Unterbrechungen 7 und 8 in Führungsabschnitte 9, 10 und 11 unterteilt, von denen jeder gegenüber dem vorausgehenden Führungsabschnitt ein stärkeres Gefälle aufweist. Außerdem befinden sich - in Transportrichtung gesehen - zwischen den einzelnen Führungsabschnitten Abstände. Der Rahmen 2 besitzt zwei Seitenwände 2a, die durch eine Traverse 2b miteinander verbunden sind, an der der Schwingungsantrieb 3 befestigt ist.

Aus Figur 1 ist insbesondere ersichtlich, daß zwischen den einzelnen Führungsabschnitten 9, 10 und 11 Höhenstufen 7a und 8a vorhanden sind. Dadurch tritt beim Übergang der Flaschen und großen Flaschenteile von einem Führungsabschnitt auf den anderen ein kurzer freier Fall auf, der eine Rüttelbewegung darstellt. Da durch das zunehmende Gefälle auch der Abstand zwischen den einzelnen Flaschen und großen Flaschenteilen vergrößert wird, werden dadurch eingeschlossene und/oder festgehaltene Kleinteile freigegeben und können in den Auffangtrichter 5 fallen.

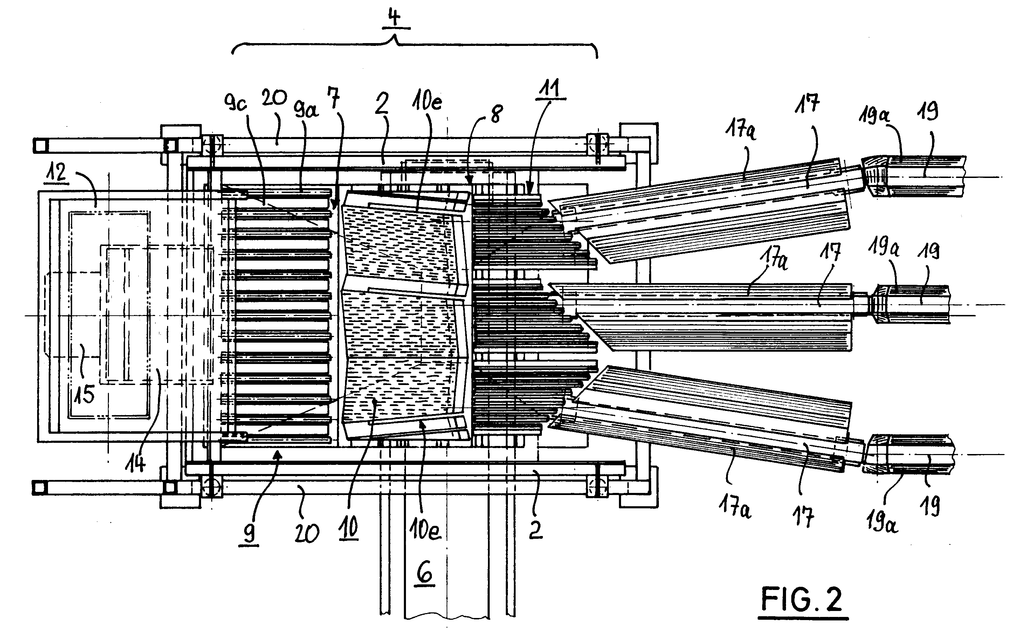

Es ist den Figuren 1 und 2 weiterhin zu entnehmen, daß zwischen den einzelnen Führungsabschnitten 9, 10 und 11 außer den senkrechten Abständen auch waagrechte Abstände vorhanden sind, die den Durchtritt der besagten Kleinteile begünstigen bzw. ermöglichen.

Gemäß den Figuren 1 und 2 ist der Vorrichtung eine Sammelstelle 12 für eine Altglasmasse zugeordnet, wobei die Sammelstelle 12 als Vorratsbehälter oder Silo ausgebildet ist. Zwischen der Sammelstelle 12 und der Bezugsplattform 1 befindet sich noch eine Übergabeeinrichtung 14, die gleichfalls als Vibrationsförderer mit einem weiteren Schwingungsantrieb 15 ausgebildet ist. Es sind aber auch andere Übergabeeinrichtungen denkbar, wie beispielsweise Förderbänder. Die Gesamtanordnung der Gleitführungen 4 ist dabei so getroffen, daß sich die Flaschen oder großen Flaschenteile parallel zur Transportrichtung ausrichten und nicht durch die Zwischenräume bzw. Spalte hindurchfallen können. Die bisher beschriebenen Vorrichtungsteile sind an einem Maschinengestell 20 befestigt.

Ab dem Führungsabschnitt 10 (einschließlich) sind die Vorrichtungsteile jeweils dreifach ausgeführt, also auch der Führungsabschnitt 11, Förderbänder 17 und 19, sowie die nur teilweise gezeigten Trennvorrichtungen 18. Es versteht sich jedoch, daß praktisch jede beliebige Zahl von Führungsabschnitten und Trennvorrichtungen in Parallelschaltung vorhanden sein kann. Bei Kleinanlagen kann auch jeweils nur ein Führungsabschnitt 10 und 11 vorhanden sein.

An jeden der Führungsabschnitte 11 schließt sich als Mittel zur Übergabe ein Förderband 17 an, durch das die Flaschen und großen Flaschenteile unter Beibehaltung ihrer Lageorientierung zu einer Trenneinrichtung 18 geführt werden, von der nur der Anfangsteil gezeigt ist und zu der ein weiteres Förderband 19 gehört. Deren Bau- und Funktionsweise wurde bereits eingangs erläutert. Durch Schrägstellung der Ebenen der Förderbänder 17 und 19 rollen die Flaschen und Flaschenteile gegen Seitenwände 17a bzw. 19a, so daß auch hier die Lageorientierung beibehalten wird.

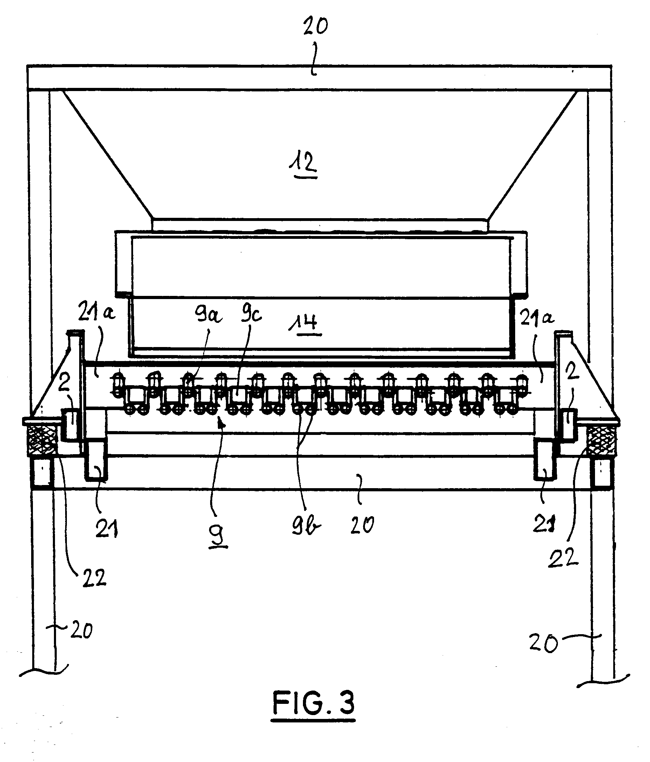

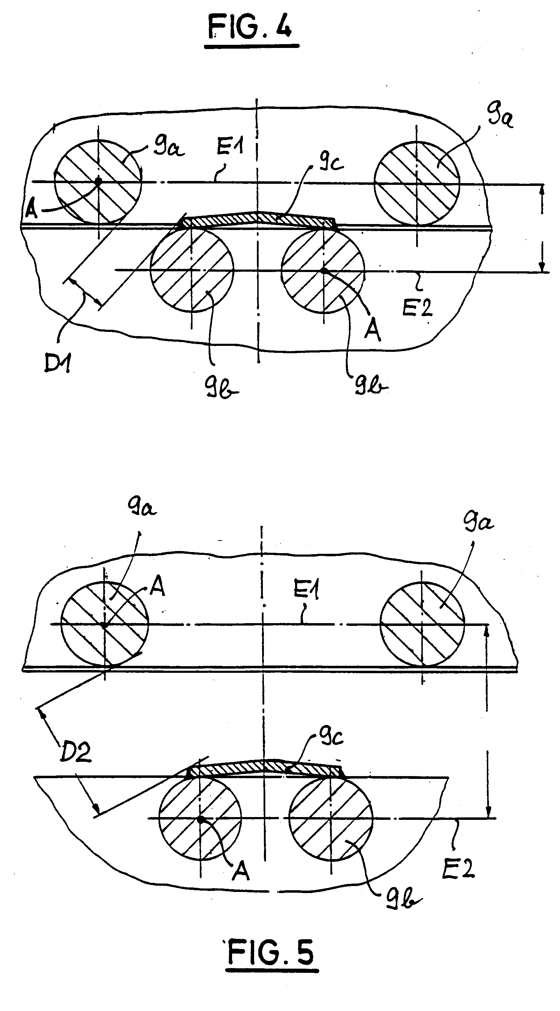

Aus den Figuren 3, 4 und 5 geht hervor, daß der erste Führungsabschnitt 9 aus Stäben 9a und 9b besteht, deren Achsen A in zwei untereinander liegenden Ebenen E1 und E2 angeordnet sind. Jeweils vier Stäbe 9a, 9b, deren Achsen auf den Eckpunkten eines sich nach oben verbreiternden Trapezes liegen, bilden eine Stabgruppe. Die jeweils obersten Stäbe 9a wirken - mit Ausnahme der äußersten Stäbe - jeweils nach beiden Seiten als Führungen. Die Ebenen E1, E2 sind in Transportrichtung divergierend angeordnet, so daß sich die spaltförmigen seitlichen Durchtrittsöffnungen von dem Abstand D1 auf den Abstand D2 vergrößern. Dadurch wird ein Festklemmen von Kleinteilen verhindert. Durch eine fliegende Befestigung der Stäbe können diese vibrieren, wodurch die Trennfunktion weiter verbessert wird. Die beiden unteren Stäbe 9b einer Stabgruppe sind durch ein dachförmiges Profil 9c miteinander verbunden, dessen Längsachse in Transportrichtung verläuft.

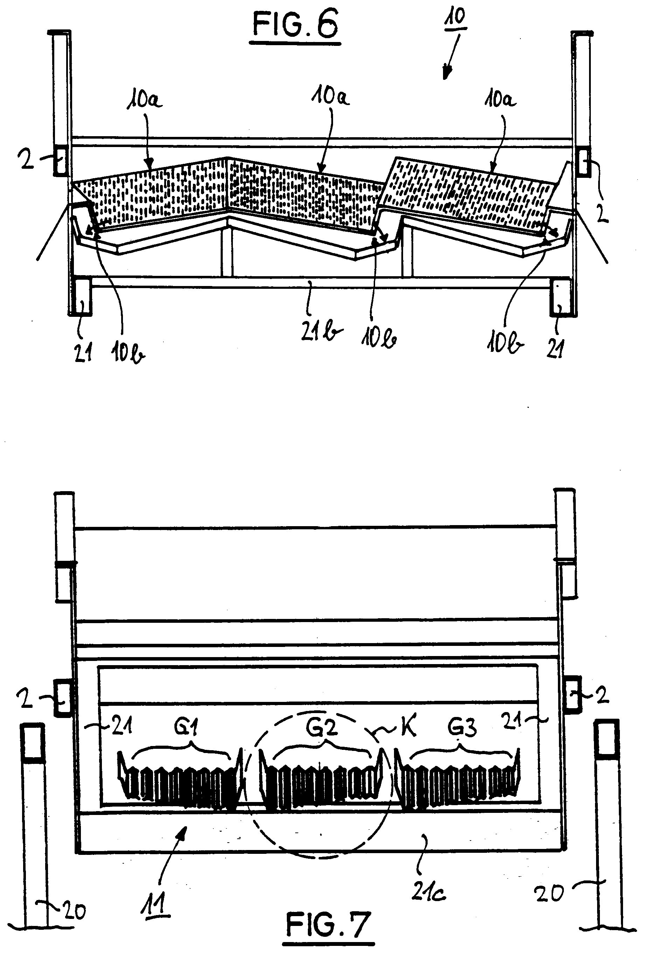

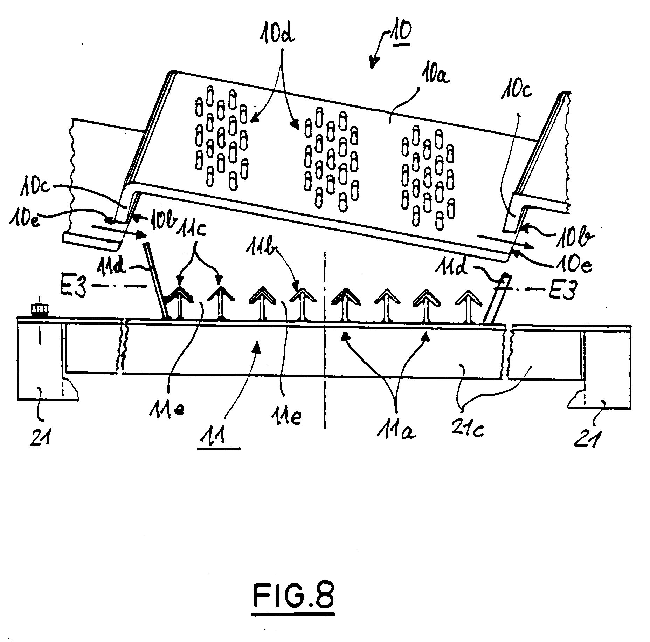

Gemäß den Figuren 6 und 8 besteht der zweite Führungsabschnitt 10 aus drei Blechen 10a, die jeweils in Transportrichtung und quer dazu geneigt sind und an der tiefsten Stelle je eine Scheitellinie 10b aufweisen, die asymmetrisch zum Querschnitt verläuft. Die Bleche 10a sind mit schlitzförmigen Durchbrechungen 10d für den Durchtritt von Feinteilen versehen (siehe insbesondere Figur 8). Figur 8 zeigt nur einen Teil der Durchbrechungen in vergrößertem Maßstab. Diese sind in Wirklichkeit gleichförmig verteilt in den Blechen 10a angeordnet. Durch die Querneigung legen sich die Flaschen achsparallel an Seitenflächen 10c der Bleche 10a an. Am unteren Ende der Seitenflächen 10c sind Schlitze 10e angeordnet (siehe auch Figur 2), durch die größere Flachglasscherben in Pfeilrichtung austreten können.

Gemäß den Figuren 7 und 8 besteht der sich mit Abständen anschließende dritte Führungsabschnitt 11 aus Profilen 11a mit je einer Dachfläche 11b, deren Firstlinien 11c in Transportrichtung verlaufen. Die Profile 11a weisen Abstände 11e für den Durchtritt von Feinteilen auf. Ferner besitzen die Profile 11a unterschiedliche Längen, derart, daß die Firstlinien 11c an den Profilenden auf einer Linie liegen, die unter einem von 90 Grad abweichenden Winkel zur Transportrichtung verläuft (Figur 2). Die Firstlinien 11c jedes zweiten Profils 11a liegen in einer weiteren, abwärts geneigten Ebene E3. Die Firstlinien der alternierend dazwischenliegenden Profile 11a liegen in einer weiteren, etwas stärker geneigten Ebene, um eine geringe Divergenz der Profile zu erzeugen, so daß ein Festklemmen von Feinteilen auch an dieser Stelle verhindert wird. Die Profile 11a sind zu Profilgruppen G1, G2 und G3 zusammengefaßt, von denen jede Gruppe zwischen hochstehenden Seitenwänden 11d angeordnet ist.

Gemäß den Figuren 1, 3, 6, 7 und 8 sind die Führungsabschnitte 9, 10 und 11 über Traversen 21a, 21b und 21c, von denen nur ein Teil beziffert ist, an einem Tragrahmen 21 angeordnet, dessen Hauptebene in Transportrichtung nach unten geneigt an der Bezugsplattform 1 befestigt ist. Der Rahmen 2 der Bezugsplattform 1 ist über Schwingmetalle 22 auf dem Maschinengestell 20 gelagert (Figur 3).

## Patentansprüche

1. Vorrichtung zum Vorsortieren und Transportieren eines Stromes von festem Altglas mit Flaschen und großen Flaschenteilen von einer Sammelstelle (12) für eine Altglasmasse unter Ausscheidung von Feinteilen zu mindestens einer Trenneinrichtung (18) für die Aufteilung des verbliebenen Gasstromes in unterschiedliche Komponenten, mit einer schwingungsfähigen Bezugsplattform (1), an der in Transportrichtung mit Gefälle versehene Gleitführungen (4) für einen lageorientierten Transport der Flaschen und großen Flaschenteile angeordnet sind, die Durchtritte für die Feinteile zwischen sich einschließen, sowie mit Mitteln zum Überleiten der lageorientierten Teile zur Trenneinrichtung (18), **dadurch gekennzeichnet**, daß die Gleitführungen (4) in Transportrichtung ein zunehmendes Gefälle aufweisen.

2. Vorrichtung nach Anspruch 1, **dadurch gekennzeichnet**, daß die Gleitführungen (4) in Transportrichtung durch mindestens eine Unterbrechung (7, 8) in Führungsabschnitte (9, 10, 11) unterteilt sind.

3. Vorrichtung nach Anspruch 2, **dadurch gekennzeichnet**, daß zwischen den einzelnen Führungsabschnitten (9, 10, 11) in Transportrichtung mindestens eine Höhenstufe (7a, 8a) vorhanden ist.

4. Vorrichtung nach Anspruch 2, **dadurch gekennzeichnet**, daß zwischen den einzelnen Führungsabschnitten (9, 10, 11) in Transportrichtung mindestens ein waagrechter Abstand vorhanden ist.

5. Vorrichtung nach Anspruch 1, **dadurch gekennzeichnet**, daß ein erster Führungsabschnitt (9) aus Stäben (9a, 9b) besteht, die in zwei untereinander liegende Ebenen (E1 und E2) angeordnet sind.

6. Vorrichtung nach Anspruch 5, **dadurch gekennzeichnet**, daß jeweils vier Stäbe (9a, 9b), deren Achsen auf den Eckpunkten eines sich nach oben verbreiternden Trapezes liegen, eine Stabgruppe bilden.

7. Vorrichtung nach Anspruch 5, **dadurch gekennzeichnet**, daß die Ebenen (E1, E2) in Transportrichtung divergierend angeordnet sind.

8. Vorrichtung nach Anspruch 6, **dadurch gekennzeichnet**, daß die beiden unteren Stäbe (9b) einer Stabgruppe durch ein dachförmiges Profil (9c) miteinander verbunden sind, dessen Längsachse in Transportrichtung verläuft.

9. Vorrichtung nach Anspruch 1, **dadurch gekennzeichnet**, daß ein zweiter Führungsabschnitt (10) aus mindestens einem Blech (10a) besteht, das sowohl in Transportrichtung als auch quer dazu nach unten geneigt verläuft und an der tiefer liegenden Kante eine in Transportrichtung verlaufende, nach oben ragende Seitenfläche (10c) aufweist.

10. Vorrichtung nach Anspruch 9, **dadurch gekennzeichnet**, daß das mindestens eine Blech (10a) an der Übergangsstelle in die Seitenfläche (10c) mit einem Schlitz (10e) für den seitlichen Austritt von Flachglasscherben versehen ist.

11. Vorrichtung nach Anspruch 9, **dadurch gekennzeichnet**, daß das mindestens eine Blech (10a) mit Durchbrechungen (10d) für den Durchtritt von Feinteilen nach unten versehen ist.

12. Vorrichtung nach Anspruch 1, **dadurch gekennzeichnet**, daß ein dritter Führungsabschnitt (11) aus Profilen (11a) mit je einer Dachfläche (11b) besteht, deren Firstlinien (11c) in Transportrichtung verlaufen und daß die Profile (11a) Abstände (11c) für den Durchtritt von Feinteilen aufweisen.

13. Vorrichtung nach Anspruch 12, **dadurch gekennzeichnet**, daß die Profile (11a) unterschiedliche Längen aufweisen, derart, daß die Firstlinien (11c) an den Profilenden angenähert auf einer Linie liegen, die unter einem von 90 Grad abweichenden Winkel zur Transportrichtung verläuft.

14. Vorrichtung nach Anspruch 12, **dadurch gekennzeichnet**, daß die Firstlinien (11c) der Profile (11a) alternierend in zwei geneigten Ebenen liegen, die in Transportrichtung divergierend verlaufen.

15. Vorrichtung nach Anspruch 1, **dadurch gekennzeichnet**, daß mindestens zwei der Führungsabschnitte (10, 11) an einem Tragrahmen (21) angeordnet sind, dessen Hauptebene in Transportrichtung nach unten geneigt an der Bezugsplattform (1) befestigt ist.

16. Vorrichtung nach Anspruch 1, **dadurch gekennzeichnet**, daß die Mittel für die Überleitung der lageorientierten Teile von den Gleitführungen (4) zu der mindestens einen Trenneinrichtung (19) aus jeweils einem Förderband (17) und einer dazu parallelen Seitenwand (17a) bestehen, wobei das Förderband (17) eine solche Querneigung besitzt, daß die Flaschen und Flaschenteile achsparallel an der Seitenwand (17a) geführt werden.

17. Vorrichtung nach Anspruch 1, **dadurch gekennzeichnet**, daß unterhalb der Gleitführungen (4) ein Auffangtrichter (5) angeordnet ist, unter dem sich ein Querförderband (6) für den Abtransport der Feinteile befindet.
